# EUROPÄISCHE PATENTSCHRIFT

(11) **EP 2 956 812 B1**
(45) Veröffentlichungstag und Bekanntmachung des Hinweises auf die Patenterteilung: **14.08.2019**
(21) Anmeldenummer: 14703590.1
(22) Anmeldetag: 10.02.2014
(51) Int. Cl.: G02B 27/01, G01C 21/36

(54) **VERFAHREN UND VORRICHTUNG ZUM BETREIBEN EINER HEAD-UP-DISPLAYEINHEIT**
METHOD AND DEVICE FOR OPERATING A HEADS-UP DISPLAY UNIT
PROCÉDÉ ET DISPOSITIF POUR FAIRE FONCTIONNER UNE UNITÉ D'AFFICHAGE TÊTE HAUTE

(30) Priorität: 12.02.2013 DE 102013202219
(43) Veröffentlichungstag der Anmeldung: 23.12.2015
(73) Patentinhaber: Bayerische Motoren Werke Aktiengesellschaft, 80809 München (DE)
(72) Erfinder: SCHWAB, Axel, 80538 München (DE); WAGNER-GENTNER, Armin, 80999 München (DE)
(86) Internationale Anmeldenummer: PCT/EP2014/052524
(87) Internationale Veröffentlichungsnummer: WO 2014/124893

(56) Entgegenhaltungen:
- DE-A1-102007 058 295
- US-A1- 2001 008 394
- V. CHARISSIS ET AL: "Evaluation of Prototype Automotive Head-Up Display Interface: Testing Driver's Focusing Ability through a VR Simulation", 2007 IEEE INTELLIGENT VEHICLES SYMPOSIUM, 1. Juni 2007 (2007-06-01), Seiten 560-565, XP055109516, ISSN: 1931-0587, DOI: 10.1109/IVS.2007.4290174 ISBN: 978-1-42-441068-2
- DANIEL R TUFANO: "Automotive HUDs: The Overlooked Safety Issues", HUMAN FACTORS, HUMAN FACTORS AND ERGONOMICS SOCIETY, SANTA MONICA, CA, US, Bd. 39, Nr. 2, 1. Juni 1997 (1997-06-01), Seiten 303-311, XP009177177, ISSN: 0018-7208

## Beschreibung

Die Erfindung betrifft ein Verfahren und eine Vorrichtung zum Betreiben einer Head-Up-Displayeinheit eines Fahrzeugs.

In modernen Fahrzeugen werden einem Fahrzeugführer visuell viele Informationen beispielsweise mittels einer Head-Up-Displayeinheit bereitgestellt. Gerade nachts kann dies allerdings dazu führen, dass der Fahrzeugführer von den vielen signalisierten Informationen überfordert wird.

V. Chassis ET AL "Evaluation of Prototype Automotive Head-Up-Display Interface: Testing Driver's Focusing Ability through a VR Simulation", 2007 IEEE Intelligent Vehicles Symposium, 1. Juni 2007 (2007-06-01), Seiten 560-565, befasst sich mit dem Analysieren des Benutzerverhaltens durch Tests mit verschiedenen Fokussierstufen für die Projektion einer Voll-Frontscheibe HUD Schnittstelle. Für diesen Zweck wurde ein VR Fahrsimulator entwickelt um verschiedene Schärfentiefen eines HUDs zu testen bei verschiedenen Wetter- und Verkehrsbedingungen.

Daniel R Tufano:"Automotive HUD's: The Overlooked Safety Issues", HUMAN FACTORS, HUMAN FACTORS AND ERGONOMICS SOCIETY, SANTA MONICA, CA, US, Bd. 39,Nr. 2, 1. Juni 1997 (1997-06-01), Seiten 303-311, befasst sich mit den Limitierungen einer Brennweite eines HUDs und ihre Auswirkung auf der Wahrnehmung von Objekte außerhalb des Fahrzeugs und der Auswirkung der HUD Bildgebung auf visuelle Aufmerksamkeit. Weiterer Stand der Technik ist offenbart in DE102007058295 A1 und US2001/008394 A1.

Die Aufgabe, die der Erfindung zugrunde liegt, ist es einerseits ein Verfahren und andererseits eine Vorrichtung zum Betreiben einer Head-Up-Displayeinheit zu schaffen, das beziehungsweise die dazu beiträgt, dass ein von einer Head-Up-Displayeinheit erzeugtes Bild den Zustand eines Auges des Fahrzeugsführers berücksichtigt.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus einerseits durch ein Verfahren und andererseits durch eine korrespondierende Vorrichtung zum Betreiben einer Head-Up-Displayeinheit eines Fahrzeugs, mittels der ein Bild erzeugt wird, das aus einem vorgegebenen Sichtfenster auf einer Frontscheibe des Fahrzeugs für einen Fahrzeugführer als virtuelles Bild sichtbar ist. Es wird abhängig von Bilddaten einer in einem Innenraum des Fahrzeugs angeordneten Kamera, die das Auge des Fahrzeugführers erfasst, eine Pupillengröße ermittelt, wobei die Pupillengröße die Größe der Pupille des Auges des Fahrzeugführers ist. Abhängig von der Pupillengröße wird ein Schärfentiefewert ermittelt, der repräsentativ ist für eine geschätzte aktuelle Schärfentiefe eines Auges des Fahrzeugführers. Abhängig von dem ermittelten Schärfentiefewert wird ein Signalisierungssignal erzeugt zum Erzeugen des Bildes, so dass das zu erzeugende Bild an die Schärfentiefe des Auges des Fahrzeugführers angepasst ist. Die Schärfentiefe des Auges des Fahrzeugsführers ist repräsentativ dafür, wie groß der Bereich ist, in dem der Fahrzeugführer scharf sieht. Weist das Auge des Fahrzeugführers beispielsweise eine geringe Schärfentiefe auf, was beispielsweise nachts der Fall sein kann, so ist es für den Fahrzeugführer gegebenenfalls nicht möglich, das gesamte virtuelle Bild scharf wahrzunehmen. Für die Ermittlung des Schärfentiefewert kann beispielsweise, mittels einer Kamera im Innenraum, das Auge des Fahrzeugführers erfasst werden. Aus den Bilddaten der Kamera kann nun auf einfache Weise die Größe der Pupille ermittelt werden. Da die Pupille des menschlichen Auges wie eine Blende wirkt, gibt sie direkt Aufschluss über die aktuelle Schärfentiefe. So weist das menschliche Auge bei einer kleinen Pupille eine große Schärfentiefe und bei einer großen Pupille eine kleine Schärfentiefe auf. Indem das Signalisierungssignal erzeugt wird zum Erzeugen des Bildes abhängig von dem ermittelten Schärfentiefewert, der repräsentativ ist für eine geschätzte aktuelle Schärfentiefe des Auges des Fahrzeugführers, kann das Bild an die Schärfentiefe des Auges des Fahrzeugführers angepasst werden, so dass der Fahrzeugführer gegebenenfalls nicht von der Anzeige überfordert und/oder abgelenkt wird.

Gemäß einer vorteilhaften Ausgestaltung weist das zu erzeugende Bild einen statischen Bildbereich und einen kontaktanalogen Bildbereich auf. Es wird ermittelt, ob ein Bildelement in dem Bild erzeugt werden soll. Ferner wird ermittelt, falls ein Bildelement erzeugt werden soll, ob das Bildelement sowohl statisch als auch kontaktanalog signalisiert werden soll. Falls ermittelt wurde, dass das Bildelement sowohl statisch als auch kontaktanalog signalisiert werden soll, wird der ermittelte Schärfentiefewert mit einem vorgegebenen Schwellenwert verglichen. Das Signalisierungssignal wird derart erzeugt, dass bei einem ermittelten Schärfentiefewert, der eine größere Schärfentiefe repräsentiert als der vorgegebene Schwellenwert, in dem statischen Bildbereich ein statisches Bildelement und in dem kontaktanalogen Bildbereich ein korrespondierendes kontaktanaloges Bildelement erzeugt wird. Bei einem ermittelten Schärfentiefewert, der eine kleinere Schärfentiefe repräsentiert als der vorgegebene Schwellenwert, wird das Signalisierungssignal derart erzeugt, dass nur das kontaktanaloge Bildelement erzeugt wird.

Auf diese Weise kann der Fahrer gegebenenfalls bei einer geringen Schärfentiefe nicht mehr von dem statischen Bildbereich abgelenkt werden. So kann beispielsweise der Fokus des Fahrers auf den kontaktanalogen Bildbereich gelegt werden. So kann beispielsweise, falls ein mögliches Verkehrshindernis detektiert wird, das Verkehrshindernis in dem kontaktanalogen Bereich mittels eines Bildelements markiert werden, beispielsweise durch eine kontaktanaloge Umrandung des Verkehrshindernisses. Beispielsweise kann nun zusätzlich ein Bildelement, wie beispielsweise ein Warnhinweis, im statischen Bildbereich erzeugt werden. Weist der Fahrzeugführer nun eine geringe Schärfentiefe auf, so könnte es passieren, dass der Fahrer das kontaktanaloge Bildelement nicht wahrnimmt, da er das statische Bildelement fokussiert. Um dies zu verhindern, wird nun bei einem geringen ermittelten Schärfentiefewert kein statisches Bildelement eingeblendet sondern nur ein kontaktanaloges Bildelement, alternativ kann auch der gesamte statische Bildbereich bei geringer Schärfentiefe desaktiviert werden.

Gemäß einer weiteren vorteilhaften Ausgestaltung wird das Signalisierungssignal derart erzeugt, dass bei einem ermittelten Schärfentiefewert, der eine kleine Schärfentiefe repräsentiert, zumindest ein Teil des erzeugten Bildes eine geringere Schärfe aufweist, als bei einem ermittelten Schärfentiefewert, der eine größere Schärfentiefe repräsentiert. Auf diese Weise kann gegebenenfalls erreicht werden, dass das Auge des Fahrzeugführers bei einer geringen Schärfentiefe nicht von dem Bild überfordert wird. Beispielsweise kann der Teil des erzeugten Bildes einen Randbereich des Bildes darstellen und/oder ein oder mehrere Bildelemente. Durch die unscharfe Darstellung kann zusätzlich der Effekt erzielt werden, dass der unscharfe Teil des erzeugten Bildes für den Fahrzeugführer weiter weg erscheint als der scharfe Teil, was bei einer kontaktanalogen Darstellung von Vorteil sein kann.

Gemäß einer weiteren vorteilhaften Ausgestaltung wird das Signalisierungssignal derart erzeugt, dass bei einem ermittelten Schärfentiefewert, der eine kleine Schärfentiefe repräsentiert, zumindest ein Teil des erzeugten Bildes eine geringere Helligkeit aufweist, als bei einem ermittelten Schärfentiefewert, der eine große Schärfentiefe repräsentiert. Durch die Einstellung der Helligkeit kann auf einfache Art ein an die Schärfentiefe des Fahrzeugführers angepasstes Bild erzeugt werden.

Gemäß einer weiteren vorteilhaften Ausgestaltung wird das Signalisierungssignal derart erzeugt, dass bei einem ermittelten Schärfentiefewert, der eine kleine Schärfentiefe repräsentiert, zumindest ein Teil des erzeugten Bildes dunklere Farben aufweist, als bei einem ermittelten Schärfentiefewert, der eine große Schärfentiefe repräsentiert. Durch die Anpassung der Farben kann das Bild an die Schärfentiefe des Fahrzeugführers auf einfache Weise angepasst werden.

Gemäß einer weiteren vorteilhaften Ausgestaltung wird das Signalisierungssignal derart erzeugt, dass bei einem ermittelten Schärfentiefewert, der eine kleine Schärfentiefe repräsentiert, zumindest ein Teil des erzeugten Bildes eine höhere Transparenz aufweist, als bei einem ermittelten Schärfentiefewert, der eine große Schärfentiefe repräsentiert. Durch die Anpassung der Transparenz abhängig von der ermittelten Schärfentiefe kann ein an die Schärfentiefe des Fahrzeugführers angepasstes Bild auf einfache Weise erzeugt werden.

Gemäß einer weiteren vorteilhaften Ausgestaltung wird der Schärfentiefewert abhängig von einem Messsignal eines Umgebungslichtsensors ermittelt. Gerade aus dem Umgebungslicht kann auf einfache Weise auf die aktuelle Schärfentiefe des Fahrzeugführers geschlossen werden. So repräsentiert beispielsweise eine helle Umgebung mit hoher Wahrscheinlichkeit eine aktuelle große Schärfentiefe des Fahrzeugführers und eine dunkle Umgebung eine geringe Schärfentiefe des Fahrzeugführers. Des Weiteren kann der Umgebungslichtsensor gegebenenfalls für weitere Funktionen in dem Fahrzeug, wie beispielsweise eine Lichtautomatik, verwendet werden.

Gemäß einer weiteren vorteilhaften Ausgestaltung wird zusätzlich eine aktuelle Blickrichtung des Fahrzeugführers ermittelt und das Signalisierungssignal zusätzlich abhängig von der ermittelten Blickrichtung erzeugt. Somit kann zusätzlich die Blickrichtung bei dem Erzeugen des Bildes berücksichtigt werden.

Gemäß einer weiteren vorteilhaften Ausgestaltung wird ermittelt, ob ein Bildelement in dem Bild erzeugt werden soll und falls ermittelt wurde, dass ein Bildelement erzeugt werden soll, wird das Signalisierungssignal derart erzeugt, dass die Größe des Bildelements abhängig von der ermittelten Blickrichtung ermittelt wird. So kann beispielsweise ein Bildelement vergrößert werden, wenn die Blickrichtung des Fahrzeugführers auf das Bildelement gerichtet ist und verkleinert werden, wenn die Blickrichtung des Fahrzeugführers von dem Bildelement weggerichtet ist. Beispielsweise kann hierfür ein Vektor die Blickrichtung repräsentieren. Zusätzlich kann ein Abstand des Bildelements in dem virtuellen Bild zu dem Schnittpunkt des virtuellen Bildes mit dem Vektor ermittelt werden und abhängig von dem ermittelten Abstand die Größe des Bildelements angepasst werden, so dass bei einem kleineren Abstand das Bildelement größer dargestellt wird als bei einem größeren Abstand.

Gemäß einer weiteren vorteilhaften Ausgestaltung wird ermittelt, ob ein Bildelement in dem Bild erzeugt werden soll und falls ermittelt wurde, dass ein Bildelement in dem Bild erzeugt werden soll, das Signalisierungssignal derart erzeugt wird, dass die Schärfe des Bildelements abhängig von der ermittelten Blickrichtung ermittelt wird. So kann beispielsweise ein Bildelement schärfer dargestellt werden, falls die Blickrichtung auf das Bildelement gerichtet ist und unschärfer, je weiter die Blickrichtung von dem Bildelement weggerichtet ist. Beispielsweise kann hierfür ein Vektor die Blickrichtung repräsentieren. Zusätzlich kann ein Abstand des Bildelements in dem virtuellen Bild zu dem Schnittpunkt des virtuellen Bildes mit dem Vektor ermittelt werden und abhängig von dem ermittelten Abstand die Schärfe des Bildelements angepasst werden, so dass bei einem kleineren Abstand das Bildelement schärfer dargestellt wird als bei einem größeren Abstand.

Gemäß einer weiteren vorteilhaften Ausgestaltung wird ermittelt, ob der Blick des Fahrers auf einen Bereich des virtuellen Bildes gelenkt werden soll. Falls ermittelt wird, dass der Blick des Fahrers auf den Bereich des virtuellen Bildes gelenkt werden soll, so wird das Signalisierungssignal derart erzeugt, dass ein optischer Reiz in dem Bereich des Bildes erzeugt wird, das mit dem Bereich des virtuellen Bildes korrespondiert, auf das der Blick des Fahrers gelenkt werden soll.

Beispielsweise kann mittels Fahrzeugsensoren oder Ähnlichem eine Gefahr detektiert werden. Falls nun ermittelt wird, dass der Fahrzeugführer die Gefahr wahrscheinlich nicht wahrnimmt, da die Gefahr beispielsweise nicht in der Blickrichtung liegt, kann auf einfache Weise der Fahrzeugführer bei einer geringen Schärfentiefe dazu veranlasst werden, seinen Blick auf gegebenenfalls wichtige Bildbereiche, wie auf die Gefahr, zu richten. Der optische Reiz kann beispielsweise ein helles Signal und/oder ein blinkendes Signal sein.

Gemäß einer weiteren vorteilhaften Ausgestaltung wird die Blickrichtung abhängig von Bilddaten einer Kamera ermittelt. So kann beispielsweise die Kamera ein Auge oder ein Augenpaar des Fahrzeugführers detektieren und abhängig von dem detektierte Auge oder dem Augenpaar die Blickrichtung ermittelt werden.

Ausführungsbeispiele der Erfindung sind anhand der schematischen Zeichnungen näher erläutert.

Es zeigen:
Figur 1 ein Fahrzeug mit einer Head-Up-Displayeinheit,
Figur 2 die Head-Up-Displayeinheit,
Figur 3 ein virtuelles Bild und
Figur 4 ein Ablaufdiagramm zum Betreiben der Head-Up-Displayeinheit.

Elemente gleicher Konstruktion oder Funktion sind figurenübergreifend mit den gleichen Bezugszeichen gekennzeichnet.

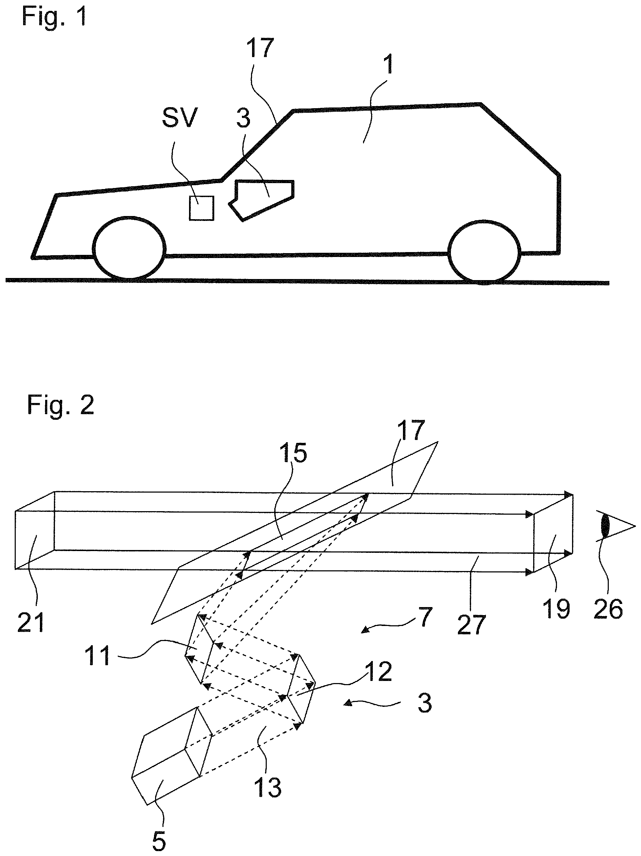

Figur 1 zeigt ein Fahrzeug 1 mit einer Head-Up-Displayeinheit 3. Die Head-Up-Displayeinheit 3 ist in dem Fahrzeug 1 unterhalb einer Frontscheibe 17 angeordnet. Das Fahrzeug 1 weist des Weiteren eine Steuervorrichtung SV auf.

Die Steuervorrichtung SV weist eine Recheneinheit, einen Daten- und Programmspeicher sowie mindestens eine Schnittstelle auf, mit der sie signaltechnisch gekoppelt ist mit der Head-Up-Displayeinheit 3 zum Senden und Empfangen von Daten.

Die Steuervorrichtung SV kann auch als Vorrichtung zum Betreiben einer Head-Up-Displayeinheit bezeichnet werden.

Figur 2 zeigt die Head-Up-Displayeinheit 3. Die Head-Up-Displayeinheit 3 weist eine bilderzeugende Einheit 5 und ein optisches System 7 auf. Das optische System 7 weist einen oder mehrere Umlenkspiegel 12 sowie ein letztes optisches Element 11 auf. Das letzte optische Element 11 ist beispielsweise ein Spiegel, insbesondere ein abbildender Spiegel. Alternativ kann das letzte optische Element 11 eine Linse sein. Ein von der bilderzeugenden Einheit 5 erzeugtes Bild wird in das optische System 7 eingestrahlt und entlang eines optischen Strahlengangs 13 weitergeleitet. Der optische Strahlengang 13 des erzeugten Bildes trifft in einem Bereich 15 auf die Frontscheibe 17 auf. Auf diese Weise wird ein virtuelles Bild 21 erzeugt, das aus einem vorgegebenen Sichtfenster 19 für einen Fahrzeugführer beziehungsweise für ein Auge 26 des Fahrzeugsführers sichtbar ist.

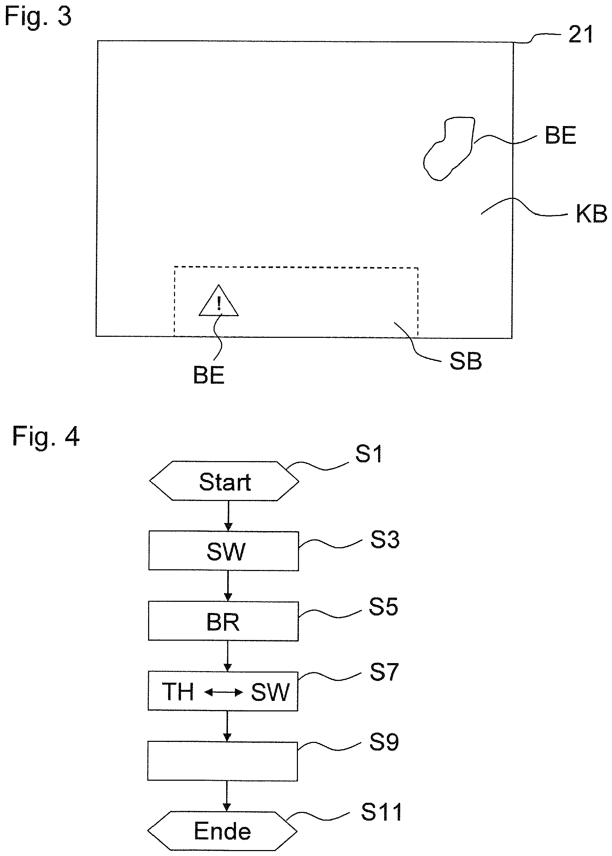

Figur 3 zeigt beispielhaft das virtuelle Bild 21. Das virtuelle Bild 21 kann beispielsweise einen statischen Bildbereich SB und/oder einen kontaktanalogen Bildbereich KB aufweisen. Da das virtuelle Bild 21 von dem Bild der bilderzeugenden Einheit 5 erzeugt wird, weist auch das von der bilderzeugenden Einheit 5 erzeugte Bild den kontaktanalogen Bildbereich KB und/oder den statischen Bildbereich SB auf. In dem statischen Bildbereich SB können beispielsweise statische Bildelemente BE signalisiert sein, wie beispielsweise ein Warnhinweis und/oder ein Verkehrshinweis, wie Geschwindigkeitsbegrenzungen und Ähnliches. In dem kontaktanalogen Bildbereich KB können beispielsweise Bildelemente BE kontaktanalog dargestellt sein, so können sie beispielsweise eine Umrandung eines Hindernisses repräsentieren.

Zum Betreiben der Head-Up-Displayeinheit 3 ist in dem Daten- und Programmspeicher der Steuervorrichtung SV bevorzugt zumindest ein Programm abgespeichert, das während des Betriebs des Fahrzeugs 1 und/oder der Head-Up-Displayeinheit 3 abgearbeitet werden kann. Das Programm ist im Folgenden anhand des Ablaufdiagramms der Figur 4 näher erläutert.

Das Programm, das in der Steuervorrichtung SV abgearbeitet wird, wird in einem Schritt S1 gestartet, in dem gegebenenfalls Variablen initialisiert werden können.

In einem Schritt S3 wird ein Schärfentiefewert SW ermittelt, der repräsentativ ist für eine geschätzte aktuelle Schärfentiefe des Auges 26 des Fahrzeugführers. Der Schärfentiefewert SW kann beispielsweise mittels eines Umgebungslichtsensor und/oder mittels einer Außenkamera ermittelt werden. So repräsentiert beispielsweise eine helle Umgebung des Fahrzeugs 1 mit hoher Wahrscheinlichkeit eine hohe Schärfentiefe und eine dunkle Umgebung eine geringe Schärfentiefe.

Alternativ oder zusätzlich kann der Schärfentiefewert SW auch mittels einer Innenraumkamera ermittelt werden, die das Auge 26 des Fahrzeugführers erfasst. Mittels Bilddaten dieser Kamera kann beispielsweise die Größe der Pupille des erfassten Auges 26 ermittelt werden. Da die Pupille des menschlichen Auges wie eine Blende wirkt, repräsentiert eine große Pupille eine geringere Schärfentiefe als eine kleine Pupille.

In einem Schritt S5 wird eine Blickrichtung BR ermittelt, die Blickrichtung BR kann beispielsweise mittels der Innenraumkamera ermittelt werden. Hierfür kann beispielsweise das Auge 26 oder ein Augenpaar detektiert werden und abhängig von dem Auge 26 oder dem Augenpaar die Blickrichtung BR ermittelt werden.

In einem Schritt S7 wird der ermittelte Schärfentiefewert SW mit einem vorgegebenen Schwellenwert TH verglichen. Der Schwellenwert TH wird beispielsweise so vorgegeben, dass er eine mittlere Schärfentiefe repräsentiert und dass bei einer Schärfentiefe, die kleiner ist als die Schärfentiefe, die der Schwellenwert TH repräsentiert, nicht mehr das gesamte virtuelle Bild 21 scharf wahrgenommen werden kann.

In einem Schritt S9 wird ein Signalisierungssignal erzeugt abhängig von dem ermittelten Schärfentiefewert SW und/oder abhängig von dem Vergleich des ermittelten Schärfentiefewert SW mit dem vorgegebenen Schwellenwert TH und/oder abhängig von der ermittelten Blickrichtung BR.

So kann das Signalisierungssignal beispielsweise derart erzeugt werden, dass bei einem ermittelten Schärfentiefewert SW, der eine kleine Schärfentiefe repräsentiert, zumindest ein Teil des erzeugten Bildes eine geringere Schärfe und/oder eine geringere Helligkeit und/oder dunklere Farben und/oder eine höhere Transparenz aufweist, als bei einem ermittelten Schärfentiefewert SW, der eine große Schärfentiefe repräsentiert.

Alternativ oder zusätzlich kann ermittelt werden, ob ein Bildelement BE in dem Bild erzeugt werden soll und falls ein Bildelement BE in dem Bild erzeugt werden soll, kann abhängig von dem ermittelten Schärfentiefewert SW das Signalisierungssignal beispielsweise derart erzeugt werden, dass bei einem ermittelten Schärfentiefewert SW, der eine kleine Schärfentiefe repräsentiert, das Bildelement BE eine geringere Schärfe und/oder eine geringere Helligkeit und/oder dunklere Farben und/oder eine höhere Transparenz aufweist, als bei einem ermittelten Schärfentiefewert SW, der eine große Schärfentiefe repräsentiert.

Alternativ oder zusätzlich kann das Signalisierungssignal abhängig von der Blickrichtung BR erzeugt werden. Beispielsweise kann hierfür ein Vektor die Blickrichtung BR repräsentieren. Zusätzlich kann ein Abstand des Bildelements BE in dem virtuellen Bild 21 zu dem Schnittpunkt des virtuellen Bildes 21 mit dem Vektor ermittelt werden und abhängig von dem ermittelten Abstand die Größe und/oder die Schärfe und/oder die Helligkeit und/oder die Transparenz und/oder die Farbe des Bildelements BE angepasst werden. Beispielsweise wird das Bildelement BE derart angepasst, dass bei einem kleineren Abstand das Bildelement BE größer und/oder schärfer und/oder heller und/oder weniger transparent und oder in einer helleren Farbe dargestellt wird als bei einem größeren Abstand.

Alternativ oder zusätzlich kann ermittelt werden, ob das Bildelement BE sowohl kontaktanalog als auch statisch signalisiert werden soll. Beispielsweise können vorgegebene Situationen erkannt werden, in denen das Bildelement BE sowohl kontaktanalog als auch statisch signalisiert werden soll. So können beispielsweise vorgegebene Gefahrensituationen mittels Fahrzeugsensoren oder Ähnlichem detektiert werden. Zu den Gefahrensituation kann beispielsweise ein statisches Bildelement BE als Warnhinweis und ein kontaktanaloges Bildelement BE als Markierung der Gefahr vorgesehen sein. Falls ermittelt wird, dass das Bildelement BE sowohl statisch als auch kontaktanalog signalisiert werden soll, kann abhängig von dem Vergleich des ermittelten Schärfentiefewertes SW mit dem Schwellenwert TH, falls der ermittelte Schärfentiefewert SW eine größere Schärfentiefe repräsentiert als der vorgegebene Schwellenwert TH, in dem statischen Bildbereich SB ein statisches Bildelement BE und in dem kontaktanalogen Bildbereich KB ein korrespondierendes kontaktanaloges Bildelement BE erzeugt werden und bei einem ermittelten Schärfentiefewert SW, der eine kleinere Schärfentiefe repräsentiert als der vorgegebene Schwellenwert TH, nur das kontaktanaloge Bildelement BE erzeugt werden.

Alternativ oder zusätzlich kann ermittelt werden ob der Blick des Fahrers auf einen Bereich des virtuellen Bildes 21 gelenkt werden soll. Beispielsweise kann mittels Fahrzeugsensoren oder Ähnlichem eine Gefahr detektiert werden. Nun kann beispielsweise ermittelt werden, ob der Fahrzeugführer die Gefahr wahrscheinlich wahrnimmt, beispielsweise abhängig von der Blickrichtung BR. Nimmt er sie wahrscheinlich nicht wahr, so kann beispielsweise der optische Reiz erzeugt werden, damit er die Gefahr wahrscheinlich wahrnimmt. Falls ermittelt wird, dass der Blick auf einen Bereich des virtuellen Bildes 21 gelenkt werden soll, so kann das Signalisierungssignal beispielsweise derart erzeugt werden, dass ein optischer Reiz, wie beispielsweise eine helle Farbe und/oder ein blinkendes Signal in dem Bereich des Bildes erzeugt wird, das mit dem Bereich des virtuellen Bildes 21 korrespondiert, auf den der Blick des Fahrers gelenkt werden soll.

In einem Schritt S11 wird das Programm beendet und kann gegebenenfalls wieder in dem Schritt S1 gestartet werden.

### Bezugszeichenliste

- 1: Fahrzeug
- 3: Head-Up-Display-Einheit
- 5: bilderzeugende Einheit
- 7: optisches System
- 11: letztes optisches Element
- 12: Umlenkspiegel
- 13: optischer Strahlengang des erzeugten Bildes
- 15: Bereich auf Frontscheibe
- 17: Frontscheibe
- 19: Sichtfenster
- 21: virtuelles Bild
- 26: Auge

- BE: Bildelement
- BR: Blickrichtung
- KB: kontaktanaloger Bildbereich
- SB: statischer Bildbereich
- SV: Steuervorrichtung
- SW: Schärfentiefewert
- TH: Schwellenwert

## Patentansprüche

1. Verfahren zum Betreiben einer Head-Up-Displayeinheit (3) eines Fahrzeugs (1), mittels der ein Bild erzeugt wird, das aus einem vorgegebenen Sichtfenster (19) auf einer Frontscheibe (17) des Fahrzeugs (1) für einen Fahrzeugführer als virtuelles Bild (21) sichtbar ist, bei dem
- eine Pupillengröße abhängig von Bilddaten einer in einem Innenraum des Fahrzeugs angeordneten Kamera, die ein Auge (26) des Fahrzeugführers erfasst, ermittelt wird, wobei die Pupillengröße die Größe der Pupille des Auges des Fahrzeugführers ist,
- ein Schärfentiefewert (SW) abhängig von der Pupillengröße ermittelt wird, wobei der Schärfentiefewert (SW) repräsentativ ist für eine geschätzte aktuelle Schärfentiefe des Auges (26) des Fahrzeugführers, wobei die Schärfentiefe die Größe des Bereichs angibt, in dem der Fahrzeugführer scharf sieht,
- ein Signalisierungssignal erzeugt wird zum Erzeugen des Bildes und zwar abhängig von dem ermittelten Schärfentiefewert (SW), so dass das zu erzeugende Bild an die Schärfentiefe des Auges des Fahrzeugführers angepasst ist.

2. Verfahren nach Anspruch 1, wobei das zu erzeugende Bild einen statischen Bildbereich (SB) und einen kontaktanalogen Bildbereich (KB) aufweist und bei dem
- ermittelt wird, ob ein Bildelement (BE) in dem Bild erzeugt werden soll,
- falls ermittelt wurde, dass ein Bildelement (BE) erzeugt werden soll, ermittelt wird, ob das Bildelement (BE) sowohl statisch als auch kontaktanalog signalisiert werden soll,
- falls ermittelt wurde, dass das Bildelement (BE) sowohl statisch als auch kontaktanalog signalisiert werden soll, der ermittelte Schärfentiefewert (SW) mit einem vorgegebenen Schwellenwert (TH) verglichen wird und das Signalisierungssignal derart erzeugt wird, dass bei einem ermittelten Schärfentiefewert (SW), der eine größere Schärfentiefe repräsentiert als der vorgegebene Schwellenwert (TH), in dem statischen Bildbereich (SB) ein statisches Bildelement (BE) und in dem kontaktanalogen Bildbereich (KB) ein korrespondierendes kontaktanaloges Bildelement (BE) erzeugt wird und bei einem ermittelten Schärfentiefewert (SW), der eine kleinere Schärfentiefe repräsentiert als der vorgegebene Schwellenwert (TH), nur das kontaktanaloge Bildelement (BE) erzeugt wird.

3. Verfahren nach einem der vorhergehenden Ansprüche, bei dem das Signalisierungssignal derart erzeugt wird, dass bei einem ermittelten Schärfentiefewert (SW), der eine kleine Schärfentiefe repräsentiert, zumindest ein Teil des erzeugten Bildes eine geringere Schärfe aufweist, als bei einem ermittelten Schärfentiefewert (SW), der eine große Schärfetiefe repräsentiert.

4. Verfahren nach einem der vorhergehenden Ansprüche, bei dem das Signalisierungssignal derart erzeugt wird, dass bei einem ermittelten Schärfentiefewert (SW), der eine kleine Schärfentiefe repräsentiert, zumindest ein Teil des erzeugten Bildes eine geringere Helligkeit aufweist, als bei einem ermittelten Schärfentiefewert (SW), der eine große Schärfentiefe repräsentiert.

5. Verfahren nach einem der vorhergehenden Ansprüche, bei dem das Signalisierungssignal derart erzeugt wird, dass bei einem ermittelten Schärfentiefewert (SW) der eine kleine Schärfentiefe repräsentiert, zumindest ein Teil des erzeugten Bildes dunklere Farben aufweist, als bei einem ermittelten Schärfentiefewert (SW), der eine große Schärfentiefe repräsentiert.

6. Verfahren nach einem der vorhergehenden Ansprüche, bei dem das Signalisierungssignal derart erzeugt wird, dass bei einem ermittelten Schärfentiefewert (SW), der eine kleine Schärfentiefe repräsentiert, zumindest ein Teil des erzeugten Bildes eine höhere Transparenz aufweist, als bei einem ermittelten Schärfentiefewert (SW), der eine große Schärfentiefe repräsentiert.

7. Verfahren nach einem der vorhergehenden Ansprüche, bei dem der Schärfentiefewert (SW) abhängig von einem Messsignal eines Umgebungslichtsensors ermittelt wird.

8. Verfahren nach einem der vorhergehenden Ansprüche, bei dem zusätzlich eine aktuelle Blickrichtung (BR) des Fahrzeugführers ermittelt wird und das Signalisierungssignal zusätzlich abhängig von der ermittelten Blickrichtung (BR) erzeugt wird.

9. Verfahren nach Anspruch 8, bei dem
- ermittelt wird, ob ein Bildelement (BE) in dem Bild erzeugt werden soll und
- falls ermittelt wurde, dass ein Bildelement (BE) erzeugt werden soll,
das Signalisierungssignal derart erzeugt wird, dass die Größe des Bildelements (BE) abhängig von der ermittelten Blickrichtung (BR) ermittelt wird.

10. Verfahren nach Anspruch 8 oder 9, bei dem
- ermittelt wird, ob ein Bildelement (BE) in dem Bild erzeugt werden soll und
- falls ermittelt wurde, dass ein Bildelement (BE) erzeugt werden soll,
das Signalisierungssignal derart erzeugt wird, dass die Schärfe des Bildelements (BE) abhängig von der ermittelten Blickrichtung (BR) ermittelt wird.

11. Verfahren nach Anspruch 8, 9 oder 10, bei dem
- ermittelt wird ob der Blick des Fahrers auf einen Bereich des virtuellen Bildes (21) gelenkt werden soll,
- falls ermittelt wird, dass der Blick des Fahrers auf den Bereich des virtuellen Bildes (21) gelenkt werden soll, das Signalisierungssignal derart erzeugt wird, dass ein optischer Reiz in dem Bereich des Bildes erzeugt wird, das mit dem Bereich des virtuellen Bildes (21) korrespondiert, auf den der Blick des Fahrers gelenkt werden soll.

12. Verfahren nach Anspruch 8, 9, 10 oder 11, bei dem die Blickrichtung (BR) abhängig von Bilddaten einer Kamera ermittelt wird.

13. Steuervorrichtung zum Betreiben einer Head-Up-Display-Einheit (3) eines Fahrzeuges (1), wobei die Steuervorrichtung eine Recheneinheit, einen Daten- und Programmspeicher und mindestens eine Schnittstelle aufweist, über die die Steuervorrichtung signaltechnisch mit der Head-Up-Display-Einheit (3) koppelbar ist, so dass mittels der Head-Up-Display-Einheit (3) ein Bild erzeugt werden kann, das aus einem vorgegebenen Sichtfenster (19) auf einer Frontscheibe (17) des Fahrzeugs (1) für einen Fahrzeugführer als virtuelles Bild (21) sichtbar ist, wobei die Steuervorrichtung dazu ausgebildet ist:
- eine Pupillengröße abhängig von Bilddaten einer in einem Innenraum des Fahrzeugs angeordneten Kamera, mittels der ein Auge (26) des Fahrzeugführers erfasst werden kann, zu ermitteln, wobei die Pupillengröße die Größe der Pupille des Auges des Fahrzeugführers ist,
- einen Schärfentiefewert (SW) abhängig von der Pupillengröße zu ermitteln, wobei der Schärfentiefewert (SW) repräsentativ ist für eine geschätzte aktuelle Schärfentiefe des Auges (26) des Fahrzeugführers, wobei die Schärfentiefe die Größe des Bereichs angibt, in dem der Fahrzeugführer scharf sieht,
- ein Signalisierungssignal zum Erzeugen des Bildes zu erzeugen und zwar abhängig von dem ermittelten Schärfentiefewert (SW), so dass das zu erzeugende Bild an die Schärfentiefe des Auges des Fahrzeugführers angepasst ist.

## Claims

1. A method for operating a heads-up display unit (3) of a vehicle (1), by means of which an image is generated which is visible to a vehicle driver as a virtual image (21) from a specified viewing window (19) on a windshield (17) of the vehicle (1), in which method
- a pupil size is determined depending on image data of a camera which is arranged in the interior of the vehicle and which detects an eye (26) of the vehicle driver, wherein the pupil size is the size of the pupil of the eye of the vehicle driver,
- a depth of field value (SW) is determined depending on the pupil size, wherein the depth of field value (SW) is representative of an estimated current depth of field of the eye (26) of the vehicle driver, wherein the depth of field specifies the size of the region in which the vehicle driver sees in focus,
- a signalling signal is generated in order to generate the image, more specifically dependently on the determined depth of field value (SW), such that the image to be generated is adapted to the depth of field of the eye of the vehicle driver.

2. A method according to claim 1, wherein the image to be generated comprises a static image region (SB) and a contact-analogue image region (KB), and in which method
- it is determined whether an image element (BE) is to be generated in the image,
- if it is determined that an image element (BE) is to be generated, it is determined whether the image element (BE) is to be signalled statically and in a contact-analogue manner,
- it if is determined that the image element (BE) is to be signalled statically and in a contact-analogue manner, the determined depth of field value (SW) is compared with a specified threshold value (TH) and the signalling signal is generated in such a way that, in the event that a depth of field value (SW) which represents a greater depth of field than the specified threshold value (TH) is determined, a static image element (BE) is generated in the static image region (SB) and a corresponding contact-analogue image element (BE) is generated in the contact-analogue image region (KB), and, in the event that a depth of field value (SW) which represents a smaller depth of field than the specified threshold value (TH) is determined, only the contact-analogue image element (BE) is generated.

3. A method according to any one of the preceding claims, in which the signalling signal is generated in such a way that, in the event that a depth of field value (SW) which represents a small depth of field is determined, at least part of the generated image has a lower sharpness than in the event that a depth of field value (SW) which represents a large depth of field is determined.

4. A method according to any one of the preceding claims, in which the signalling signal is generated in such a way that, in the event that a depth of field value (SW) which represents a small depth of field is determined, at least part of the generated image has a lower brightness than in the event that a depth of field value (SW) which represents a large depth of field is determined.

5. A method according to any one of the preceding claims, in which the signalling signal is generated in such a way that, in the event that a depth of field value (SW) which represents a small depth of field is determined, at least part of the generated image has darker colours than in the event that a depth of field (SW) which represents a large depth of field is determined.

6. A method according to any one of the preceding claims, in which the signalling signal is generated in such a way that, in the event that a depth of field value (SW) which represents a small depth of field is determined, at least part of the generated image has a higher transparency than in the event that a depth of field value (SW) which represents a large depth of field is determined.

7. A method according to any one of the preceding claims, in which the depth of field value (SW) is determined depending on a measurement signal of an ambient light sensor.

8. A method according to any one of the preceding claims, in which the current viewing direction (BR) of the vehicle driver is additionally determined and the signalling signal is generated in addition depending on the determined viewing direction (BR).

9. A method according to claim 8, in which
- it is determined whether an image element (BE) is to be generated in the image, and
- if it is determined that an image element (BE) is to be generated,
the signalling signal is generated in such a way that the size of the image element (BE) is determined depending on the determined viewing direction (BR).

10. A method according to claim 8 or 9, in which
- it is determined whether an image element (BE) is to be generated in the image, and
- if it is determined that an image element (BE) is to be determined,
the signalling signal is generated in such a way that the sharpness of the image element (BE) is determined depending on the determined viewing direction (BR).

11. A method according to claim 8, 9 or 10, in which
- it is determined whether the driver's view should be directed towards a region of the virtual image (21),
- if it is determined that the driver's view should be directed towards the region of the virtual image (21), the signalling signal is generated in such a way that an optical stimulus is generated in the region of the image that corresponds to the region of the virtual image (21) towards which the driver's view should be directed.

12. A method according to claim 8, 9, 10 or 11, in which the viewing direction (BR) is determined depending on image data of a camera.

13. A control device for operating a heads-up display unit (3) of a vehicle (1), wherein the control device comprises a computing unit, a data and program memory, and at least one interface, via which the control device can be coupled to the heads-up display unit (3) for signal exchange, such that an image can be generated by means of the heads-up display unit, which image is visible to a vehicle driver as a virtual image (21) from a specified viewing window (19) on a windshield (17) of the vehicle (1), wherein the control device is designed:
- to determine a pupil size depending on image data of a camera which is arranged in the interior of the vehicle and which detects an eye (26) of the vehicle driver, wherein the pupil size is the size of the pupil of the eye of the vehicle driver,
- to determine a depth of field value (SW) depending on the pupil size, wherein the depth of field value (SW) is representative of an estimated current depth of field of the eye (26) of the vehicle driver, wherein the depth of field specifies the size of the region in which the vehicle driver sees in focus,
- to generate a signalling signal in order to generate the image, more specifically dependently on the determined depth of field value (SW), such that the image to be generated is adapted to the depth of field of the eye of the vehicle driver.

## Revendications

1. Procédé de gestion d'une unité d'affichage tête haute (3) d'un véhicule (1) au moyen de laquelle est créée une image qui est visible par une fenêtre de visualisation (19) prédéfinie sur le pare-brise (17) du véhicule (1) par le conducteur du véhicule en tant qu'image virtuelle (21),
selon lequel,
- une dimension de pupille est identifiée en fonction de données d'image d'une caméra montée dans l'habitacle du véhicule qui détecte un oeil (26) du conducteur du véhicule, la dimension de pupille étant la dimension de la pupille de l'oeil du conducteur du véhicule,
- une valeur de profondeur de champ (SW) est identifiée en fonction de la dimension de pupille, la valeur de profondeur de champ (SW) représentant la profondeur de champ actuelle estimée de l'oeil (26) du conducteur du véhicule, la profondeur de champ donnant la dimension de la zone dans laquelle le conducteur du véhicule a une vision nette,
- un signal de signalisation est créé pour créer l'image et ce en fonction de la valeur de profondeur (SW) identifiée, de sorte que l'image à créer soit adaptée à la profondeur de champ de l'oeil du conducteur du véhicule.

2. Procédé conforme à la revendication 1,
selon lequel l'image à créer comporte une zone d'image statique (SB), et une zone d'image à analogie de contact (KB), et
selon lequel,
- on identifie si un élément d'image (BE) doit être créé dans l'image,
- lorsqu'il a été identifié qu'un élément d'image (BE) doit être créé, on identifie si l'élément d'image (BE) doit être signalisé de manière statique et également par analogie de contact,
- lorsqu'il a été identifié que l'élément d'image (BE) doit être signalisé de manière statique et par analogie de contact, la valeur de profondeur de champ (SW) identifiée est comparée à une valeur de seuil (TH) prédéfinie et le signal de signalisation est créé de sorte que, en présence d'une valeur de profondeur de champ (SW) identifiée qui représente une profondeur de champ supérieure à la valeur de seuil (TH) prédéfinie, on crée un élément d'image statique (BE) dans la zone d'image statique (SB) et un élément d'image (BE) à analogie de contact, dans la zone d'image à analogie de contact (KB), et qu'en présence d'une valeur de profondeur de champ (SW) identifiée qui représente une profondeur de champ inférieure à la valeur de seuil (TH) prédéfinie, seul l'élément d'image à analogie de contact (BE) soit créé.

3. Procédé conforme à l'une des revendications précédentes,
selon lequel,
le signal de signalisation est créé de sorte que, dans le cas d'une valeur de profondeur de champ (SW) identifiée qui représente une faible profondeur de champ au moins une partie de l'image créée ait une netteté plus faible que dans le cas d'une valeur de profondeur de champ (SW) identifiée qui représente une grande profondeur de champ.

4. Procédé conforme à l'une des revendications précédentes,
selon lequel,
le signal de signalisation est créé de sorte que, dans le cas d'une valeur de profondeur de champ (SW) identifiée qui représente une faible profondeur de champ au moins une partie de l'image créée ait une plus faible clarté que dans le cas d'une valeur de profondeur de champ (SW) identifiée qui représente une grande profondeur de champ.

5. Procédé conforme à l'une des revendications précédentes,
selon lequel,
le signal de signalisation est créé de sorte que, dans le cas d'une valeur de profondeur de champ (SW) identifiée qui représente une faible profondeur de champ, au moins une partie de l'image créée ait des couleurs plus sombres que dans le cas d'une valeur de profondeur de champ (SW) identifiée qui représente une grande profondeur de champ.

6. Procédé conforme à l'une des revendications précédentes,
selon lequel,
le signal de signalisation est créé de sorte que, dans le cas d'une valeur de profondeur de champ (SW) identifiée qui représente une faible profondeur de champ au moins une partie de l'image créée ait une plus grande transparence que dans le cas d'une valeur de profondeur de champ (SW) identifiée qui représente une grande profondeur de champ.

7. Procédé conforme à l'une des revendications précédentes,
selon lequel,
la valeur de profondeur de champ (SW) est déterminée en fonction d'un signal de mesure d'un capteur de lumière environnante.

8. Procédé conforme à l'une des revendications précédentes,
selon lequel,
l'orientation du regard (BR) actuelle du conducteur du véhicule est identifiée, et le signal de signalisation est en outre créé en fonction de la direction du regard (BR) identifiée.

9. Procédé conforme à la revendication 8,
selon lequel,
- on identifie si un élément d'image (BE) doit être créé dans l'image, et
- s'il a été identifié qu'un élément d'image (BE) doit être créé,
le signal de signalisation est créé de sorte que la dimension de l'élément d'image (BE) soit identifié en fonction de la direction du regard (BR) identifiée.

10. Procédé conforme à la revendication 8 ou 9,
selon lequel,
- on identifie si un élément d'image (BE) doit être créé dans l'image, et
- lorsqu'il a été identifié qu'un élément d'image (BE) doit être créé,
le signal de signalisation est créé de sorte que la netteté de l'élément d'image (BE) soit identifiée en fonction de la direction du regard (BR) identifiée.

11. Procédé conforme à l'une des revendications 8, 9 et 10,
selon lequel,
- on identifie si le regard du conducteur doit être dirigé sur une zone de l'image virtuelle (21),
- lorsqu'il a été identifié que le regard du conducteur doit être dirigé sur la zone de l'image virtuelle (21), le signal de signalisation est créé de sorte qu'un stimulus optique soit créé dans la zone de l'image qui correspond à la zone de l'image virtuelle (21) sur laquelle le regard du conducteur doit être dirigé.

12. Procédé conforme à la revendication 8, 9, 10 ou 11,
selon lequel,
la direction du regard (BR) est identifiée en fonction de données d'image d'une caméra.

13. Dispositif de commande permettant de faire fonctionner une unité d'affichage tête haute (3) d'un véhicule (1), ce dispositif de commande comprenant une unité de calcul, une mémoire de données et de programme et au moins une interface par l'intermédiaire de laquelle le dispositif de commande peut être couplé par la technique des signaux avec l'unité d'affichage tête haute (3) de sorte qu'au moyen de l'unité d'affichage tête haute (3) puisse être créée une image qui est visible en tant qu'image virtuelle (21) par le conducteur du véhicule à partir d'une fenêtre de visualisation (19) prédéfinie sur le pare-brise (17) du véhicule (1), le dispositif de commande étant réalisé pour permettre :
- d'identifier une dimension de pupille en fonction de données d'image d'une caméra montée dans l'habitacle du véhicule au moyen de laquelle un oeil (26) du conducteur du véhicule peut être identifié, la dimension de pupille étant la dimension de la pupille de l'oeil du conducteur du véhicule,
- d'identifier une valeur de profondeur de champ (SW) en fonction de la dimension de pupille, la valeur de profondeur de champ (SW) représentant la profondeur de champ actuelle estimée de l'oeil (26) du conducteur du véhicule, la profondeur de champ donnant la dimension de la zone dans laquelle le conducteur du véhicule a une vision nette,
- de créer un signal de signalisation pour créer l'image, et ce en fonction de la valeur de profondeur de champ (SW) identifiée de sorte que l'image à créer soit adaptée à la profondeur de champ de l'oeil du conducteur du véhicule.
